# EUROPEAN PATENT SPECIFICATION

(11) **EP 2 623 275 B1**
(45) Date of publication and mention of the grant of the patent: **04.11.2015**
(21) Application number: 13151415.0
(22) Date of filing: 16.01.2013
(51) Int. Cl.: B26B 13/28

(54) **A cutting tool**
Schneidwerkzeug
Outil de découpage

(30) Priority: 01.02.2012 FI 20125108
(43) Date of publication of application: 07.08.2013
(73) Proprietor: Fiskars Brands Finland OY AB, 10330 Billnäs (FI)
(72) Inventor: Vänttilä, Olli-Pekka, 10330 Billnäs (FI); Lyytikäinen, Sami, 10330 Billnäs (FI)
(74) Representative: Kolster Oy Ab

(56) References cited:
- EP-A2- 2 253 200
- US-A- 4 980 975

## Description

### BACKGROUND OF THE INVENTION

### FIELD OF THE INVENTION

This invention relates to a cutting tool with a pair of blades pivotally attached to each other, and more particularly to a solution for attaching the blades to each other.

### DESCRIPTION OF PRIOR ART

Previously there is known a cutting tool as described for example in EP 2 253 200 A where the joint around which the blades are pivoted comprises a threaded screw. When the threaded screw is rotated in relation to a threaded counterpart, the joint tightens or loosens depending on the direction of the rotation.

A problem with such a prior art cutting tool is to prevent the screw from rotating during use of the cutting tool, as this may unnecessarily tighten or loosen the joint. However, as it may become necessary to loosen or tighten the joint, possibly several times during the lifetime of the cutting tool, adjustment of the joint should be as easy and user-friendly as possible.

### SUMMARY OF THE INVENTION

According to an embodiment of the present invention, an object is to solve the above mentioned drawback and to provide a cutting tool with a novel joint construction. This object is achieved with the cutting tool according to independent claim 1.

The use of a movable locking element for preventing a first threaded part of a joint from rotating in relation to the locking element makes it possible to efficiently prevent unintended tightening or loosing of the joint during use. The movable locking element can be pushed by the user of the cutting tool to move the movable locking element away from the first threaded part. In this way the first threaded part may be easily rotated by the user in order to tighten or loosen the joint.

### BRIEF DESCRIPTION OF DRAWINGS

In the following the present invention will be described in closer detail by way of example and with reference to the attached drawings, in which
Figure 1 is a side view of an embodiment of a cutting tool,
Figure 2 is a cross sectional view of the cutting tool of Figure 1, and
Figure 3 illustrates a part of the first handle of the cutting tool in Figure 1, and
Figure 4 is an exploded view of the cutting tool of Figure 1.

### DESCRIPTION OF AT LEAST ONE EMBODIMENT

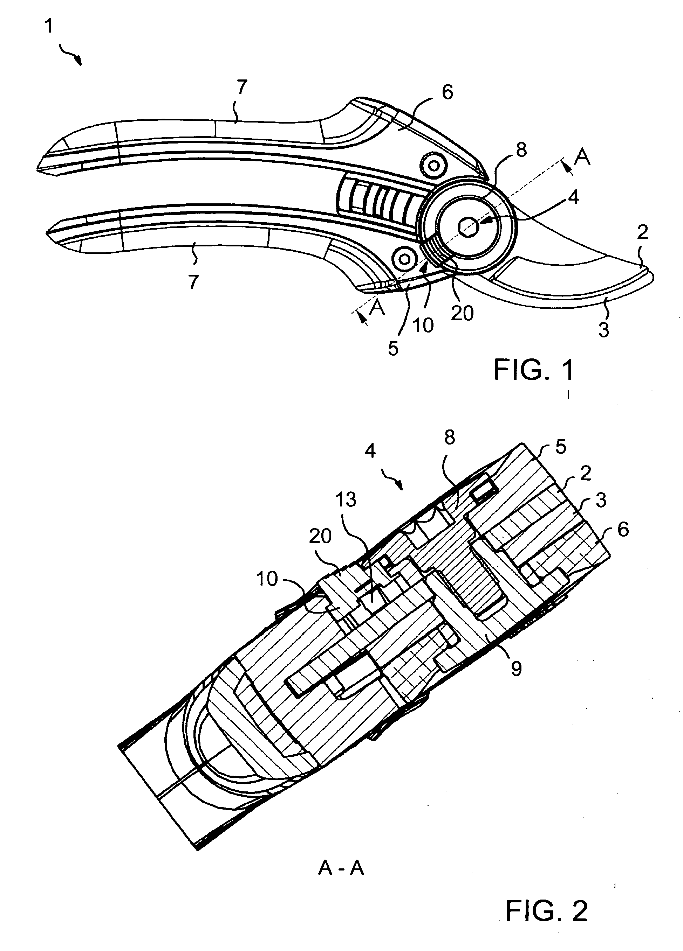

Figures 1 to 4 illustrate a first embodiment of a cutting tool. In the following it will be assumed, by way of example, that the cutting tool 1 is a pruner intended to be used for gardening. However, it should be observed that this is only an example of a practical implementation of the invention, and that in praxis, the invention may also be implemented for other cutting tools.

The cutting tool 1 comprises a first blade 2 and a second blade 3 pivotally attached to each other via a joint 4. Both the first and second blade may be implemented as cutting blades with a sharpened edge, or alternatively one of the blades may be implemented as an anvil. A first handle 5 is attached to the first blade 2 and a second handle 6 is attached to the second blade for pivoting the blades 2 and 3 in relation to each other around the joint 4. Cutting is therefore performed with the cutting tool 1 in a similar way as with a pair of scissors. A return spring 7 is used for returning the cutting tool to its original position after each cutting action. Consequently, the user presses handles 5 and 6 towards each other in order to perform a cut, and afterwards, once the force directed by the user on the handles 5 and 6 is no longer present, the spring 7 presses the handles 5 and 6 and the blades 2 and 3 away from each other by rotating them around the joint 4.

The figures show a cutting tool where the blades and the handles are detachably attached to each other, with screws, for instance. However, as an alternative, it is possible that the handles are a fixed part of the blades, in other words the blades continue as an elongated protrusion from the joint 4 such that these elongated protrusions are used as handles. In both cases the handles are "attached" to the blades.

In the illustrated example the handles 5 and 6 are provided with an additional material layer 7 which has been selected in order to make the handles as comfortable as possible in order to increase the user friendliness of the cutting tool.

In the illustrated example, the joint 4 comprises a first threaded part 8 which is connected to a threaded counterpart 9. In this example the first threaded part 8 is shaped as a screw (as it comprises an external thread) and the threaded counterpart 9 as a nut (as it comprises an internal thread). However, in other implementations the situation may be vice versa. In order to tighten or loosen the joint 4, the first threaded part 8 and the counterpart 9 are rotated in relation to each other. However, unintentional mutual rotation needs to be prevented. Such unintentional mutual rotation may occur during use of the cutting tool.

In the example shown in the figures, the first threaded part 8 and the counterpart 9 engage each other through holes in the first handle 5, the first blade 2, the second handle 6 and the second blade 3. However, in practical implementations the blades may be attached to the handles in a different way, such that it is sufficient for such holes to be arranged only in the first handle or the first blade, and correspondingly, only in the second handle or the second blade. This may be the case if the handles and blades are shaped such that they do not both extend to the joint, but instead only the handles or only the blades are present at the location of the joint.

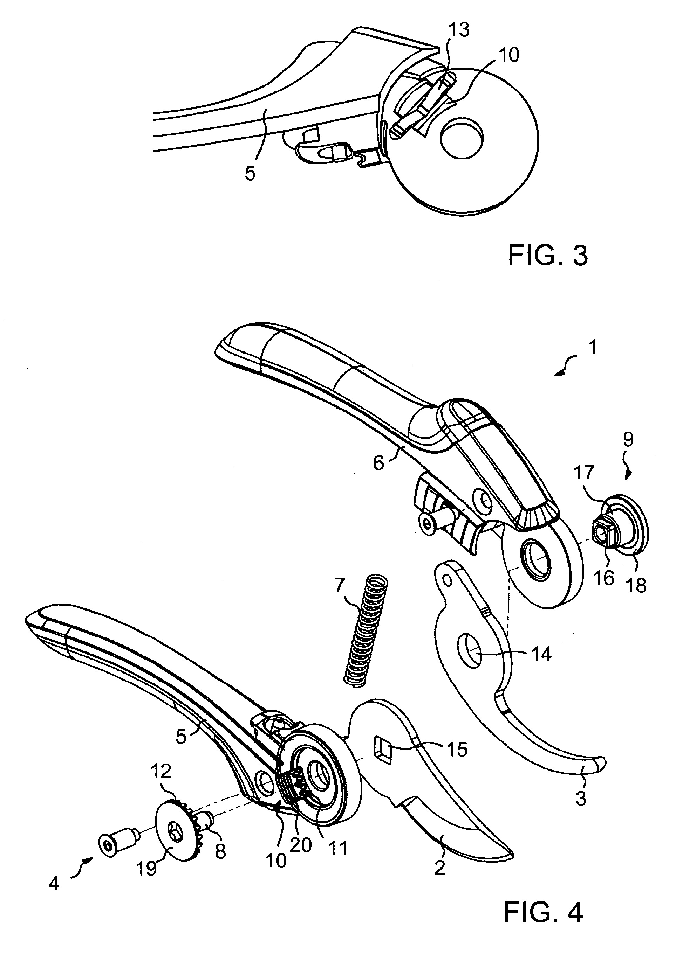

Depending on the implementation, there exist several alternative ways of ensuring that the threaded counterpart does not unintentionally rotate in relation to the first threaded part 8. It is even possible that there is no separate threaded counterpart, but instead the threaded counterpart is a part of the second handle or the second blade, in which case a thread is arranged into the second handle or the second blade, and the first threaded part engages this thread. In the figures one example is illustrated by way of example. It can be seen, especially from Figure 4, that in the illustrated example the threaded counterpart 9 comprises an engagement end 16 shaped to match the shape of a hole in the first blade 15. In this case the engagement end and the first blade are rectangular, which prevents the counterpart 9 from rotating in relation to the first blade 2. The threaded counterpart 9 additionally comprises a round distal section 17 protruding through a round hole 14 in the second blade 3. Therefore, the threaded counterpart 9 and the second blade 3 are able to rotate in relation to each other. The outer ends of the counterpart 9 and the first threaded part 8 are provided with a respective flange 18 and 19 which, while the first threaded part 8 and the counterpart 9 are engaged to each other, keep the first handle 5, the first blade 2, the second handle 6 and the second blade attached to each other at the joint 4.

In order to prevent unintentional mutual rotation of the first threaded part 8 and the threaded counterpart 9, the cutting tool 1 comprises a movable locking element 10 which is engaged with the first handle 5 in the illustrated examples, though in another implementation, the movable locking element may be engaged with the first blade 2 instead. In any case the movable locking element 10 rotates around the joint 4 with the first handle 5 and the second blade 2. A first intermeshing surface 11 of the movable locking element 10 is pressed against a second intermeshing surface 12 of the first threaded part 8 in order to prevent the first threaded part 8 from rotating in relation to the movable locking element 10 while the first and second intermeshing surfaces 11 and 12 are pressed against each other. In praxis, as illustrated in the figures by way of example, the first and second intermeshing surfaces may be provided with teeth that engage each other as the first and second intermeshing surfaces are pressed against each other.

A spring element 13 is arranged to press the movable locking element 10 against the second intermeshing surface in the first threaded part 8. In practice such a spring element may be implemented in different ways. In the illustrated embodiment, however, the spring element 13 consists of a plate spring arranged between the first blade 2 and the first handle 5. As can be seen in Figure 3, the first handle 5 comprises a hole in which the movable locking element 10 is located such that the spring element 13 may press the movable locking element outwards, in other words in the direction towards the intermeshing surface of the first threaded part 8.

In the illustrated embodiment unintentional loosening or tightening of the joint 4 is prevented due to the shape of the engagement end 16 and the hole 15 in the first blade 2, and due to the engagement between the movable locking element 10 and the first threaded part 8. However, it is very simple and easy for the user of the cutting tool to adjust the joint 4. This can be done simply by pressing the push-button area 20 of the movable locking element 10 with a finger, for instance. In that case the movable locking element 10 can be moved by the force directed towards it by the users finger in a direction against the force generated by the spring element 13, such that the first intermeshing surface 11 and the second intermeshing surface 12 are separated from each other. At that stage it becomes possible to rotate the first threaded part 8 in relation to the first handle 5 and the threaded counterpart 9. The rotation may, depending on the implementation, be carried out by the users fingers only, or alternatively with a tool, such as a screwdriver or a hexagonal key, for instance. In praxis, the possibility of pushing the push-button area 20 against the spring into the hole in the first handle 5, in other words in a direction substantially parallel with the rotation axis of the joint 4, is very ergonomic for the user. Additionally, the space required by such a mechanism is small.

It is to be understood that the above description and the accompanying figures are only intended to illustrate the present invention. It will be obvious to a person skilled in the art that the invention can be varied and modified without departing from the scope of the invention.

## Claims

1. A cutting tool (1) comprising:
a first (2) and a second (3) blade pivotally attached to each other via a joint (4),
a first handle (5) attached to the first blade (2) and a second handle (6) attached to the second blade (3) for pivoting the blades (2, 3) in relation to each other around said joint (4),
at least a first threaded part (8) whose rotation in relation to a threaded counterpart (9) tightens or loosens the joint (4) depending on the direction of the rotation,
a movable locking element (10) for preventing the first threaded part (8) from rotating in relation to the movable locking element (10), the movable locking element being engaged with at least one of the first handle (5) and the first blade (2), and
a hole in the first handle (5) for receiving the movable locking element (10) **characterized in that**
a spring element (13) is arranged between the first blade (2) and the first handle (5) to contact the movable locking element (10),
in order for the first threaded part (8) to rotate around the joint (4) with the first handle (5) and the first blade (2), the movable locking element (10) comprises a first intermeshing surface (11) which due to a force generated by a spring element (13) is pressed against a second intermeshing surface (12) in the first threaded part (8) for preventing the first threaded part (8) from rotating in relation to the movable locking element (10), and
the movable locking element (10) further comprises a push-button area (20) for directing a force towards the movable locking element (10) for moving the movable locking element (10) with the first intermeshing surface (11) away from the second intermeshing surface (12) of the first threaded part (8) in order to allow the first threaded part (8) to rotate in relation to the movable locking element (10).

2. The cutting tool according to claim 1, **characterized in that** the threaded counterpart (9) comprises a protrusion having
an engagement end (16) shaped to match the shape of a hole (15) in at least one of the first blade (2) and the first handle to prevent the threaded counterpart (9) from rotating in relation to the first blade (2) or the first handle, and
a round distal section (17) protruding through a round hole (14) in at least one of the second handle (6) and the second blade (3) for allowing the second handle (6) and second blade (3) to rotate in relation to the threaded counterpart (9).

3. The cutting tool according to one of claims 1 to 2, **characterized in that**
the first threaded part (8) consists of a screw with a flange (19) in a first end, the second intermeshing surface (12) of the first threaded part (8) is arranged on a side of the flange (19) which is facing at least one of the first handle (5) and the first blade (2),
the threaded counterpart (9) consists of a nut with a flange (19) in a second end which is distal from the engagement end (16), and
the first threaded part (8) and the threaded counterpart (9) engage each other through holes in at least one of the first handle (5) and first blade (2), and in at least one of the second handle (6) and second blade (3).

4. The cutting tool according to one of claims 1 to 3, **characterized in that** the first and second intermeshing surfaces (11, 12) are provided with teeth that engage each other.

## Patentansprüche

1. Schneidwerkzeug (1) umfassend:
eine erste (2) und eine zweite (3) Klinge, die über ein Gelenk (4) schwenkbar aneinander angebracht sind,
einen ersten Griff (5), der an der ersten Klinge (2) angebracht ist, und einen zweiten Griff (6), der an der zweiten Klinge (3) angebracht ist, um die Klingen (2, 3) in Bezug aufeinander um das Gelenk (4) zu schwenken,
zumindest ein erstes, mit einem Gewinde versehenes Teil (8), dessen Drehung in Bezug auf ein mit einem Gewinde versehenes Gegenstück (9), das Gelenk (4) abhängig von der Drehrichtung anzieht oder lockert,
ein bewegliches Sperrelement (10), um das erste, mit einem Gewinde versehene Teil (8) daran zu hindern, sich in Bezug auf das bewegliche Sperrelement (10) zu drehen, wobei das bewegliche Sperrelement zumindest mit dem ersten Griff (5) oder mit der ersten Klinge (2) in Eingriff steht, und
ein Loch im ersten Griff (5), um das bewegliche Sperrelement (10) aufzunehmen, **dadurch gekennzeichnet, dass**
zwischen der ersten Klinge (2) und dem ersten Griff (5) ein Federelement (13) derart angeordnet ist, dass es das bewegliche Sperrelement (10) berührt,
damit sich das erste, mit einem Gewinde versehene Teil (8) mit dem ersten Griff (5) und der ersten Klinge (2) um das Gelenk (4) dreht, wobei das bewegliche Sperrelement (10) eine erste Angriffsfläche (11) umfasst, die aufgrund einer Kraft, die von einem Federelement (13) erzeugt wird, gegen eine zweite Angriffsfläche (12) im ersten, mit einem Gewinde versehenen Teil (8) gedrückt wird, um das erste, mit einem Gewinde versehene Teil (8) daran zu hindern, sich in Bezug auf das bewegliche Sperrelement (10) zu drehen; und
das bewegliche Sperrelement (10) ferner einen Druckknopfbereich (20) umfasst, um eine Kraft entgegen das bewegliche Sperrelement (10) zu richten, um das bewegliche Sperrelement (10) mit der ersten Angriffsfläche (11) weg von der zweiten Angriffsfläche (12) des ersten, mit einem Gewinde versehenen Teils (8) zu bewegen, um es dem ersten, mit einem Gewinde versehenen Teil (8) zu ermöglichen, sich in Bezug auf das bewegliche Sperrelement (10) zu drehen.

2. Schneidwerkzeug nach Anspruch 1, **dadurch gekennzeichnet, dass**
das mit einem Gewinde versehene Gegenstück (9) einen Vorsprung umfasst, der aufweist:
ein Eingriffsende (16), das ausgeformt ist, um zu der Form eines Lochs (15) in zumindest einem der ersten Klinge (2) und des ersten Griffs zu passen, um das mit einem Gewinde versehene Gegenstück (9) daran zu hindern, sich in Bezug auf die erste Klinge (2) oder den ersten Griff zu drehen, und
einen runden, distalen Abschnitt (17), der durch ein Rundloch (14) in zumindest eines von zweitem Griff (6) und zweiter Klinge (3) ragt, um es dem zweiten Griff (6) und der zweiten Klinge (3) zu ermöglichen, sich in Bezug auf das mit einem Gewinde versehene Gegenstück (9) zu drehen.

3. Schneidwerkzeug nach einem der Ansprüche 1 bis 2, **dadurch gekennzeichnet, dass**
das erste, mit einem Gewinde versehene Teil (8) aus einer Schraube mit einem Flansch (19) an einem ersten Ende besteht, wobei die zweite Angriffsfläche (12) des ersten, mit einem Gewinde versehenen Teils (8) an einer Seite des Flanschs (19) angeordnet ist, die zumindest dem ersten Griff (5) oder der ersten Klinge (2) gegenüberliegt;
das mit einem Gewinde versehene Gegenstück (9) aus einer Mutter mit einem Flansch (19) an einem zweiten Ende besteht, das distal vom Eingriffsende (16) angeordnet ist; und
das erste, mit einem Gewinde versehene Teil (8) und das mit einem Gewinde versehene Gegenstück (9), durch Löcher in zumindest einem des ersten Griffs (5) und der ersten Klinge (2), und in zumindest einem des zweiten Griffs (6) und der zweiten Klinge (3), ineinandergreifen.

4. Schneidwerkzeug nach einem der Ansprüche 1 bis 3, **dadurch gekennzeichnet, dass**
die erste und die zweite der Angriffsflächen (11, 12) mit Zähnen ausgestattet sind, die ineinandergreifen.

## Revendications

1. Outil de coupe (1) comprenant :
une première lame (2) et une deuxième lame (3) fixées de manière pivotante l'une à l'autre via une articulation (4),
une première poignée (5) fixée à la première lame (2) et une deuxième poignée (6) fixée à la deuxième lame (3) pour faire pivoter les lames (2, 3) l'une par rapport à l'autre autour de ladite articulation (4),
au moins une première partie filetée (8) dont la rotation par rapport à une contrepartie filetée (9) serre ou desserre l'articulation (4) en fonction du sens de la rotation,
un élément de verrouillage mobile (10) pour empêcher la première partie filetée (8) de tourner par rapport à l'élément de verrouillage mobile (10), l'élément de verrouillage mobile étant en prise avec au moins une de la première poignée (5) et la première lame (2), et
un trou dans la première poignée (5) pour recevoir l'élément de verrouillage mobile (10), **caractérisé en ce que**
un élément de ressort (13) est disposé entre la première lame (2) et la première poignée (5) pour contacter l'élément de verrouillage mobile (10),
afin que la première partie filetée (8) puisse tourner autour de l'articulation (4) avec la première poignée (5) et la première lame (2), l'élément de verrouillage mobile (10) comprend une première surface d'engrènement (11) qui, en raison d'une force générée par un élément de ressort (13), est pressée contre une deuxième surface d'engrènement (12) dans la première partie filetée (8) pour empêcher la première partie filetée (8) de tourner par rapport à l'élément de verrouillage mobile (10), et
l'élément de verrouillage mobile (10) comprend en outre une zone à bouton-poussoir (20) pour diriger une force vers l'élément de verrouillage mobile (10) pour eloigner l'élément de verrouillage mobile (10) avec la première surface d'engrènement (11) de la deuxième surface d'engrènement (12) de la première partie filetée (8) afin de permettre à la première partie filetée (8) de tourner par rapport à l'élément de verrouillage mobile (10).

2. Outil de coupe selon la revendication 1, **caractérisé en ce que** la contrepartie filetée (9) comprend une saillie ayant
une extrémité d'engagement (16) mise en forme pour épouser la forme d'un trou (15) dans au moins une de la première lame (2) et la première poignée pour empêcher la contrepartie filetée (9) de tourner par rapport à la première lame (2) ou la première poignée, et
une section distale ronde (17) faisant saillie à travers un trou rond (14) dans au moins une de la deuxième poignée (6) et la deuxième lame (3) pour permettre à la deuxième poignée (6) et la deuxième lame (3) de tourner par rapport à la contrepartie filetée (9).

3. Outil de coupe selon l'une des revendications 1 à 2, **caractérisé en ce que**
la première partie filetée (8) consiste en une vis avec une bride (19) à une première extrémité, la deuxième surface d'engrènement (12) de la première partie filetée (8) est disposée sur un côté de la bride (19) qui fait face à au moins une de la première poignée (5) et la première lame (2),
la contrepartie filetée (9) consiste en un écrou avec une bride (19) à une deuxième extrémité qui est distale de l'extrémité d'engagement (16), et
la première partie filetée (8) et la contrepartie filetée (9) s'engagent l'une à l'autre à travers des trous dans au moins une de la première poignée (5) et la première lame (2), et au moins une de la deuxième poignée (6) et la deuxième lame (3).

4. Outil de coupe selon l'une quelconque des revendications 1 à 3, **caractérisé en ce que** la première surface d'engrènement (11) et la deuxième surface d'engrènement (12) sont munies de dents qui s'engagent les unes aux autres.
